# EUROPÄISCHE PATENTSCHRIFT

(11) **EP 0 734 931 B1**
(45) Veröffentlichungstag und Bekanntmachung des Hinweises auf die Patenterteilung: **17.11.1999**
(21) Anmeldenummer: 96101307.5
(22) Anmeldetag: 31.01.1996
(51) Int. Cl.: B61K 9/04

(54) **Vorrichtung zur Heissläuferüberwachung für Schienenfahrzeuge**
Apparatus for monitoring overheated components of railroad vehicles
Dispositif pour observer des boîtes chaudes sur des véhicules sur rails

(30) Priorität: 27.03.1995 DE 19510483; 27.11.1995 DE 19544137
(43) Veröffentlichungstag der Anmeldung: 02.10.1996
(73) Patentinhaber: KNORR-BREMSE Systeme für Schienenfahrzeuge GmbH, 80809 München (DE); Oerlikon-Knorr Eisenbahntechnik AG, 8155 Niederhasli (CH)
(72) Erfinder: Breinl, Walter, Dr., D-80997 München (DE)

(56) Entgegenhaltungen:
- DE-A- 1 455 299
- DE-A- 2 441 798
- DE-B- 2 555 363
- GB-A- 2 264 759
- US-A- 3 755 669
- US-A- 3 929 308

## Beschreibung

Die Erfindung betrifft eine Vorrichtung nach dem Gattungsbegriff des Patentanspruches 1.

Beim Betrieb von Schienenfahrzeugen, insbesondere Güterzügen, kann es vorkommen, daß ein Fahrzeugrad heißläuft und in der Folge nach einem Lagerbruch entgleist, ohne daß dies zunächst bemerkt wird. Als Folge davon kann großer Schaden sowohl am Schienenfahrzeug als auch am Gleisaufbau entstehen. Zur Vermeidung derartiger Situationen kommen Entgleisungsdetektoren (DE-A-1 455 299) zur Anwendung, welche automatische Schnellbremsungen ermöglichen, um hierdurch größeren Schaden abzuwenden. Diese Entgleisungsdetektoren können als Lagesensoren ausgebildet sein, welche im Entgleisungsfall mechanisch aus ihrer Ruhelage bewegt werden und in der Folge die Brems- bzw. Hauptluftleitung öffnen, derart, daß bei großquerschnittigem Öffnen eine Schnellbremsung herbeigeführt wird.

Bei Vorrichtungen der gattungsgemäßen Art (DE-A-2 441 798), welche zur Heißläuferüberwachung vorgesehen sind, ist wenigstens eine mit Verschlußstopfen versehene Stichleitung an ein als Notbremsventil wirkendes Relaisventil angeschlossen. Bei einem Heißlaufen eines Achslagers, an welches eine Stichleitung herangeführt ist, schmilzt der Verschlußstopfen, was zu einer Entlüftung der Stichleitung und in der Folge zu einer Notbremsung im Wege der großquerschnittigen Entlüftung der Hauptluftleitung führt.

Davon ausgehend besteht die Aufgabe der Erfindung darin, eine Heißläuferüberwachung der gattungsgemäßen Art in baulich einfacher Weise bei Notbremseinrichtungen zu verwirklichen, welche zusätzlich mit einem herkömmlichen Notbremsventil und einem Entgleisungsdetektor versehen sind. Durch eine derartige Anordnung soll eine universelle Überwachung von Notbremssituationen ermöglicht werden. Dies schließt wahlweise auch die mittels eines Notbemszugkastens mögliche manuelle Betätigung ein, also in einem Schienenfahrzeug für Personenverkehr.

Zur Lösung dieser Aufgabe dienen die Merkmale nach dem Kennzeichnungsteil des Patentanspruches 1.

Mit der(den) in die Nähe des Achslagers bzw. der Achslager herangeführten pneumatischen Stichleitung(en) ist es in baulich sehr einfacher Weise möglich, bei Überschreiten der kritischen Umgebungstemperatur eine Aktivierung eines die Notbremsung herbeiführenden Ventils auszulösen; dieses Ventil besteht aus dem ohnehin am Schienenfahrzeug vorgesehen Notbremsventil, welches bei Druckdifferenz wirkende Mittel zur großquerschnittigen Entlüftung der Hauptluftleitung aufweist und mit einem Entgleisungsdetektor in einer Baueinheit als Notbremsblock vereint ist. Der Notbremsblock kann unabhängig von der Existenz oder Betätigung eines Notbremszugkastens zum Einsatz kommen, so vorzugsweise in Güterzügen, welche im besonderen bei Transport von Gefahrengut einer Überwachung bedürfen.

Vorteilhatte Ausgestaltungen und Weiterbildungen sind in weiteren Patentansprüchen aufgeführt.

Die Erfindung ist anhand von Ausführungsbeispielen unter Bezugnahme auf die beigefügte Zeichnung erläutert.
Figur 1 ist eine Schnittansicht eines mit einer Stichleitung zur Heißläuferüberwachung verbundenen Ventils in Form eines Notbremsventils gemäß dem Stand der Technik;
Figur 2 ist eine Schnittansicht des als Notbremsventil und Entgleisungsdetektor bestehenden Notbremsblocks mit Anschluß an die zur Heißläuferüberwachung dienende Stichleitung; und
Figur 3 ist eine schematische Ansicht der Vorrichtung zur Heißläuferüberwachung nach der Erfindung in ihrer Zuordnung zur Hauptluftleitung, zu einem Notbremszugkasten und zu einem aus Notbremsventil und Entgleisungsdetektor gebildeten Notbremsblock.

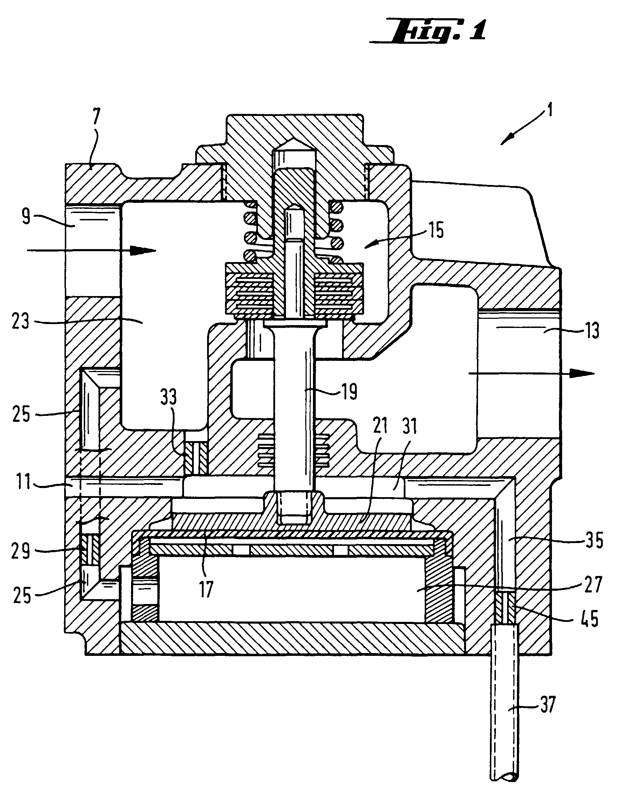

In Figur 1 der Zeichnung ist eine Notbremseinrichtung nach dem Stand der Technik wiedergegeben. Das darin verwendete Notbremsventil 1 weist ein Gehäuse 7 mit einem Hauptluftleitungsanschluß 9, einen Steueranschluß 11, einen Entlüftungsanschluß 13, ein zwischen Hauptluftleitungsanschluß und Entlüftunganschluß wirkendes, federverspanntes Ventil 15 und einen das Ventil druckabhängig betätigbaren, in Wirkverbindung mit einer Membrane 17 stehenden Stössel 19 auf. Der Stössel 19 ist an seinem unteren Ende mit einem Ventilteller 21 verbunden, welcher auf der Membrane 17 aufliegt.

Eine den Hauptluftleitungsdruck führende Kammer 23 im Gehäuse 7 ist mittels einer Bohrung 25 an die unterhalb der Membrane 17 bestehende Kammer 27 angeschlossen; in der Bohrung 25 ist eine Düse 29 vorgesehen. Die mit dem Steueranschluß 11 verbundene Kammer 31 oberhalb des Ventiltellers 21 ist über eine Düse 33 an die Kammer 23 angeschlossen. Die Kammer 31 ist fernerhin über eine Bohrung 35 mit einer Leitung 37 verbunden, von welcher Stichleitungen abzweigen. Die Stichleitungen enden nahe von Achslagern des Schienenfahrzeuges und sind jeweils durch einen Verschlußkörper verschlossen. Die Verschlußkörper bestehen aus einer Masse, welche bei Überschreiten einer vorbestimmten Temperatur schmilzt und hierbei die Stichleitungen und die mit ihr verbundene Leitung 37 entlüften, wodurch die Notbremsfunktion ausgelöst wird.

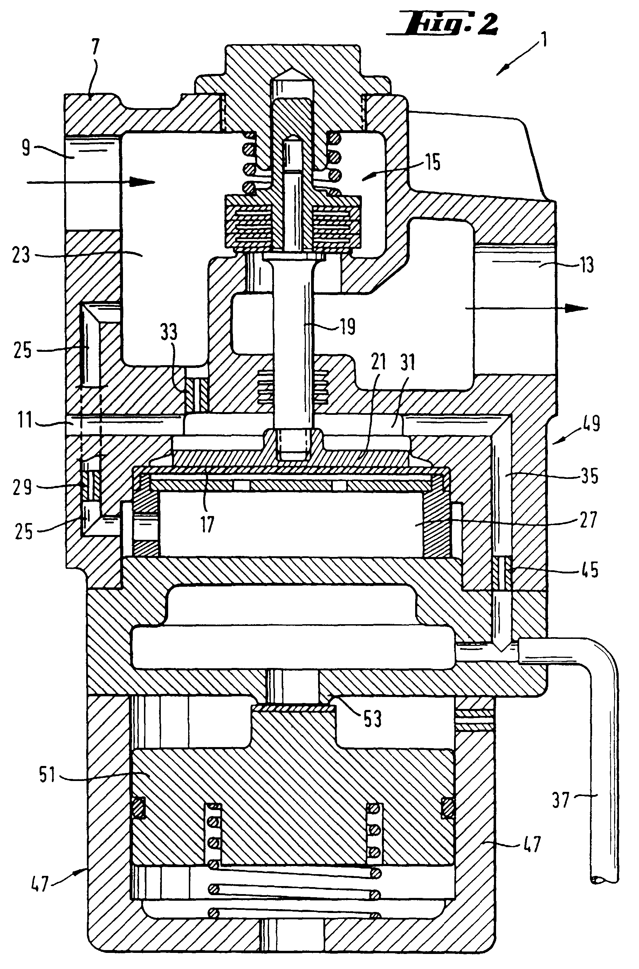

In Figur 2 ist die erfindungsgemäße Notbremseinrichtung dargestellt. Das mit einer Heißläuferüberwachung versehene Notbremsventil 1 ist hierbei mit einem Entgleisungsdetektor 47 in Form eines Notbremsblocks 49 als baulich sehr einfache Lösung vereint. Der Entgleisungsdetektor 47, welcher einer an sich bekannten Ausführungsform entsprechen kann, ist unter Verwendung der dem Notbremsventil zugeordneten Ventilbauteile zur Entlüftung der Hauptluftleitung verwendbar. Im dargestellten Ausführungsbeispiel nach Figur 2 ist der Entgleisungsdetektor mit einem federverspannten Gewichtskörper 51 versehen, welcher im Entgleisungsfall oder im Falle des Auftretens einer starken Flachstelle an einem Schienenfahrzeugrad unter Massen-Trägheitswirkung von einem Ventilsitz 53 abhebt und hierdurch vermittels der im Notbremsventil befindlichen Ventilanordnung eine Schnellbremsung der vorgenannten Art auszulösen vermag. Der Notbremsblock 49 nach der Erfindung ist hierdurch als Universalgerät für Entgleisungen, für Flachstellenbildung an Schienen fahrzeugrädern und für sogenannten Heißläufer an Achslagern der Schienenfahrzeuge verwendbar. Zusätzlich ist der Notbremsblock an einen gegebenenfalls vorhandenen Notbremszugkasten 43 anschließbar und dadurch manuell betätigbar. Durch wahlweises Verschließen eines oder mehrerer der Funktionsöffnungen ist der Notbremsblock auf jeweilige Anwendungsfälle beschränkbar. Es ist auch möglich, die Leitung 37 mit der Steuerleitung des Notbremszugkastens (nicht dargestellt) zu verbinden, da über einen derartigen Steueranschluß in an sich bekannter Weise Verbindung mit der Kammer 31 besteht, wie vorstehend unter Bezugnahme auf Figur 1 erläutert ist.

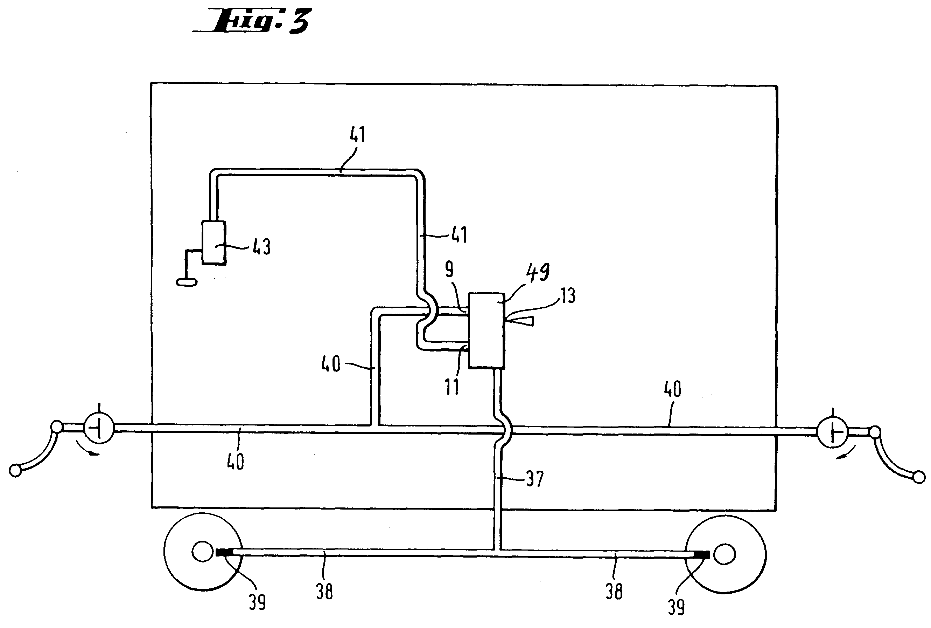

Die Wirkungsweise der unter Bezugnahme auf Figur 2 erläuterten Anordnung ist anhand der eine Anlage zur Notbremseinrichtung gemäß der Erfindung wiedergebenden Figur 3 erläutert:

Beim Auffüllen der entlang des Schienenfahrzeuges verlaufenden Hauptluftleitung 40 wird das Notbremsventil über den Hauptluftleitungsanschluß 9 mit Druckluft beaufschlagt, d. h. durch die Düse 33 erhalten die Kammer 31 und der Steueranschluß 11 Druckluft. Vom Steueranschluß 11 steht die Druckluft über die Steuerleitung 41 (Fig. 3) im Notbremszugkasten 43 an. Fernerhin steht Druckluft über die gegebenenfalls vorgesehene Düse 45 der Bohrung 35 in der Leitung 37 und in den Stichleitungen 38 an. Durch die Verbindung der Bohrung 25 mit der Düse 29 gelangt die Druckluft aus der Hauptluftleitung in die Kammer 27. Nach dem Auffüllen der Kammern 27 und 31 ist das Notbremsventil betriebsbereit.

Bei einer normalen Notbremsbetätigung mit Hilfe des Notbremszugkastens 43 (bei Verwendung in Schienenfahrzeugen für den Personenverkehr) wird die Steuerleitung 41 entlüftet; d. h. der Druck wird in der Steuerleitung schlagartig abgesenkt. Dadurch entsteht zwischen der Kammer 31 und der Kammer 27 ein Differenzdruck, welcher die Membrane 17 und den Ventilteller 21 mit Stössel 19 nach oben gerichtet drückt, derart, daß das Ventil 15 großquerschnittig geöffnet wird. Der Hauptluftleitungsdruck wird über das Ventil 15 in Richtung des Entlüftungsanschlußes 13 abgebaut. Hierdurch wird die Notbremsung eingeleitet, wie bekannt.

Die vorstehend erläuterte Funktion des Notbremsventils ist auch durch Entlüftung der Stichleitung(en) 38 auslösbar. Bei einem Heißlaufen eines der zu einer Stichleitung 38 benachbarten Achslagers schmilzt der Verschlußkörper 39 bei Übersteigen einer vorbestimmten Temperatur, mit der Folge, daß die Leitungsverbindung 37, 38 und über die gegebenenfalls vorgesehene Düse 45 und die Bohrung 35 die Kammer 31 entlüftet wird. Auch hier ist ein Differenzdruck zwischen den Kammern 27 und 31 vorhanden, derart, daß das Ventil 15 in vorgenannter Weise großquerschnittig in Richtung Außenluft entlüftet. Wenngleich die Verwendung des Notbremsventils zur zusätzlichen Heißläuferüberwachung sinnvoll ist, so kann das Notbremsventil auch für die Überwachung des Heißlaufens der Radachsen isoliert verwendet werden, vorzugsweise in Güterzügen ohne Notbremszugkästen. In diesem Fall wird der Steueranschluß 11 verschlossen, so daß das Notbremsventil nur bei Entlüftung der Stichleitung(en) 38 auslösbar ist.

Die dritte Funktion des vorstehend hinsichtlich normaler Notbremsbetätigung und durch Heißläuferüberwachung ausgelöster Betätigung erläuterten Notbremsblockes 49 besteht in der unter Bezugnahme auf Figur 2 erläuterten Betätigung im Entgleisungsfall oder im Falle des Auftretens einer starken Flachstelle an einem Schienenfahrzeugrad unter Verwendung des Entgleisungsdetektors 47. Der Notbremsblock 49 ist demnach als Universalgerät für Entgleisungssituationen, für sogenannte Flachstellenbildungen an Schienenfahrzeugrädern und für das Problem sogenannter Heißläufer an Achslagern von Schienenfahrzeugen verwendbar, und zwar sowohl bei Schienenfahrzeugen für den Personenverkehr als auch bei Güterfahrzeugen.

### Bezugszeichenliste

- 1: Notbremsventil
- 7: Gehäuse
- 9: Hauptluftleitungsanschluß
- 11: Steueranschluß
- 13: Entlüftungsanschluß
- 15: Ventil
- 17: Membrane
- 19: Stössel
- 21: Ventilteller
- 23: Kammer
- 25: Bohrung
- 27: Kammer
- 29: Düse
- 31: Kammer
- 33: Düse
- 35: Bohrung
- 37: Leitung
- 38: Stichleitung
- 39: Verschlußkörper
- 40: Hauptluftleitung
- 41: Steuerleitung
- 43: Notbremszugkasten
- 45: Düse
- 47: Entgleisungsdetektor
- 49: Notbremsblock
- 51: Gewichtskörper
- 53: Ventilsitz

## Patentansprüche

1. Notbremseinrichtung mit Heißläuferüberwachung zur Auslösung der Druckluftbremsen von Schienenfahrzeugen, umfassend ein an die Hauptluftleitung (40) des Schienenfahrzeuges angeschlossenes Notbremsventil (1), wobei die Vorrichtung zur Heißläuferüberwachung mittels einer Stichleitung (37, 38) mit der den Steuerdruck für die Aktivierung des Notbremsventils (1) führenden Kammer (31) des Notbremsventils verbunden ist, derart, daß durch den bei Entlüftung der Stichleitung (37, 38) entstehenden Druckabbau in der Kammer (31) die Aktivierung des Notbremsventils auslösbar ist, **dadurch gekennzeichnet**, daß das Notbremsventil (1) mit einem Entgleisungsdetektor (47) in einer Baueinheit als Notbremsblock (49) vereint ist, wobei der Entgleisungsdetektor (47) im Entgleisungsfall vermittels der dem Notbremsventil (1) zugeordneten Ventilbauteile die Hauptluftleitung (40) des Schienenfahrzeuges großquerschnittig zu entlüften vermag.

2. Notbremseinrichtung nach Anspruch 1, mit wenigstens einem am Schienenfahrzeug anbringbaren Notbremszugkasten (43), **dadurch gekennzeichnet**, daß die Stichleitung (37, 38) an eine vom Notbremszugkasten (43) zum Steueranschluß (11) führende Steuerleitung (41) angeschlossen ist.

3. Notbremseinrichtung nach einem der vorangehenden Ansprüche, **dadurch gekennzeichnet**, daß die Empfindlichkeit des Auslösemechanismus zur Verwendung der Notbremseinrichtung als Flachstellendetektor für Schienenfahrzeugräder einstellbar ist.

## Claims

1. Emergency brake device with hot-box monitoring apparatus for releasing the compressed-air brake systems in rail vehicles, comprising an emergency brake valve (1) connected to the brake pipe (40) of the rail vehicle, with said hot-box monitoring apparatus being connected by means of a branch pipe (37, 38) to the chamber (31) of said emergency brake valve, which carries the control pressure for activation of said emergency brake valve (1), such that on account of the pressure reduction created in said chamber (31) during venting of said branch pipe (37, 38) the activation of said emergency brake valve may be triggered, **characterised in** that said emergency brake valve (1) is combined with a derailing detector (47) in one module as an emergency brake block (49), with said derailing detector (47), being capable of venting, in the event of derailing, the brake pipe (40) of said rail vehicle over a large cross-sectional area by means of the valve components associated with said emergency brake valve (1).

2. Emergency brake device according to Claim 1, comprising at least one alarm signal box (43) adapted to be mounted on the rail vehicle, **characterised in** that said branch pipe (37, 38) is connected to a control pipe (41) leading from said alarm signal box (43) to the control connector (11).

3. Emergency brake device according to any of the preceding Claims, **characterised in** that the responsiveness of the triggering mechanism is adapted to be set as wheel flat detector for rail vehicle wheels for application of the emergency brake device.

## Revendications

1. Dispositif de freinage d'urgence à dispositif à contrôler les boîtes chaudes à desserrer les systèmes de frein à air comprimé sur des véhicules sur rails, comprenant une soupape de frein d'urgence (1) reliée à la conduite d'air générale (40) du véhicule sur rails, ledit dispositif à contrôler les boîtes chaudes étant relié, moyennant une conduite de branchement (37, 38), à la chambre (31) de ladite soupape de frein d'urgence, qui est soumise à la pression de pilotage pour l'activation de ladite soupape de frein d'urgence (1) de façon qu'en vertu de la réduction de la pression, qui est établie dans ladite chambre (31) au cours de l'évacuation de ladite conduite de branchement (37, 38), on peut déclencher l'activation de ladite soupape de frein d'urgence, **caractérisé en ce** que ladite soupape de frein d'urgence (1) est combinée avec un détecteur de déraillement (47) dans un seul sous-groupe en tant que bloc de freinage d'urgence (49), ledit détecteur de déraillement (47) étant approprié à évacuer, au cas de déraillement, la conduite d'air générale (40) dudit véhicule sur rails sur une grande aire moyennant des éléments de soupape qui sont affectés à ladite soupape de frein d'urgence (1).

2. Dispositif de freinage d'urgence selon la revendication 1, comprenant au moins une boîte d'appel du signal d'alarme (43) appropriée à être montée sur le véhicule sur rails, **caractérisé en ce** que ladite conduite de branchement (37, 38) est reliée à une conduite de pilotage (41) qui s'étend de ladite boîte d'appel du signal d'alarme (43) à l'adaptateur de pilotage (11).

3. Dispositif de freinage d'urgence selon une quelconque des revendications précédentes, **caractérisé en ce** que la sensibilité du mécanisme déclencheur est ajustable en tant que détecteur de méplat de roue pour les roues d'un véhicule sur rails pour l'emploi du dispositif de freinage d'urgence.
